# FASCICULE DE BREVET EUROPEEN

(11) **EP 0 575 240 B1**
(45) Date de publication et mention de la délivrance du brevet: **02.08.1995**
(21) Numéro de dépôt: 93401528.0
(22) Date de dépôt: 15.06.1993
(51) Int. Cl.: B62D 55/065

(54) **Dispositif de mesure de déplacement pour véhicule, notamment pour robot tout-terrain, et véhicule équipé d'un tel dispositif**
Entfernungsmessgerät für ein Fahrzeug, insbesondere für einen geländegängigen Roboter und mit solch einem Gerät ausgerüstetes Fahrzeug
Distance incasuring device for a vehicle, especially an off-road robot and vehicle equipped with such a device

(30) Priorité: 18.06.1992 FR 9207439
(43) Date de publication de la demande: 22.12.1993
(73) Titulaire: ALCATEL ALSTHOM COMPAGNIE GENERALE D'ELECTRICITE, 75008 Paris (FR)
(72) Inventeur: Richard, François, F-91940 Les Ulis (FR); Tournassoud, Pierre, F-75014 Paris (FR)
(74) Mandataire: Bourely, Paul

(56) Documents cités:
- DE-A- 3 143 234
- FR-A- 2 610 885
- US-A- 4 223 753

## Description

La présente invention concerne notamment la mesure du déplacement d'un véhicule comme connu de FR-A-2 610 885.

Elle trouve notamment application lorsque le véhicule considéré est un robot prévu pour assurer des interventions dans des conditions hostiles à l'homme. Ces interventions peuvent être par exemple des opérations de reconnaissance, de surveillance, de réparation ou de nettoyage. Pour les effectuer le robot peut être muni d'instruments adéquats tels que des caméras vidéo, des appareils de mesure, et des outils. Il peut alors par exemple être utile dans une installation nucléaire soumise à de fortes intensités de radiations ionisantes après un incident, dans l'industrie chimique en présence de risques d'explosion, dans l'agriculture ou dans les activités militaires.

Un tel robot doit pouvoir évoluer sur un terrain accidenté. Pour cela, il peut être muni de roues, de pattes, et/ou de propulseurs chenillés, fixes ou mobiles par rapport à un corps de véhicule.

Il doit aussi, de préférence sans l'aide d'opérateur humain, même à distance, assurer sa navigation, c'est-à-dire déterminer aussi précisément que possible sa position à tout instant. Or, en général, il ne peut pas disposer pour cela de repères liés au terrain. Un dispositif de navigation embarqué doit donc mesurer son déplacement à partir d'un point de départ connu. Une telle mesure se fait par intégration des composantes d'un vecteur vitesse mesuré à chaque instant.

Pour cela il est connu d'utiliser des dipositifs de mesure de vitesse comportant des centrales inertielles coopérant avec des compteurs odométriques pour déterminer la vitesse et la position d'un véhicule à quatre roues ou à deux propulseurs chenillés. Cette détermination est faite par fusion d'informations dites inertielles ou accéléromètriques et d'informations odométriques résultant d'un comptage de tours de roue. Cette fusion d'informations est rendue nécessaire par le fait que les informations accélérométriques sont affectées d'une imprécision imposant un recalage régulier des mesures de position lorsque ces dernières sont fournies par double intégration des mesures accélérométriques.

Malgré cette fusion d'informations les mesures effectuées par ces dispositifs connus restent affectées d'erreurs importantes dans les conditions habituelles d'utilisation des robots d'intervention considérés ci-dessus.

La présente invention vise notamment à diminuer de telles erreurs.

Dans ce but elle a notamment pour objet un dispositif de mesure de déplacement pour véhicule, notamment pour robot tout terrain, ce dispositif comportant :
- une bande de roulement présentant une longueur en boucle fermée et constituée pour éviter de glisser selon sa longueur par rapport à un terrain sur lequel elle est mise en appui,
- un organe odométrique portant et guidant cette bande de roulement en lui permettant de circuler selon sa longueur sur un chemin de roulement qui est formé par cet organe et qui permet de mettre cette bande en appui sur ledit terrain,
- et un capteur odométrique pour fournir une distance odométrique qui est la distance parcourue par cette bande de roulement selon sa longueur sur ce chemin de roulement,
ce dispositif étant caractérisé par le fait qu'il comporte en outre :
- des moyens de définition d'un axe de mesure,
- des moyens de mesure d'inclinaison de contact pour fournir un angle d'inclinaison de contact qui est, par rapport à cet axe de mesure, l'angle d'inclinaison de la tangente au chemin de roulement en un point de contact où la bande de roulement vient en appui sur le terrain.
- et des moyens de calcul de déplacement alimentés par ledit capteur odométrique et par ces moyens de mesure d'inclinaison, ces moyens de calcul effectuant, au moins indirectement, une multiplication de cette distance odométrique par le cosinus de cet angle d'inclinaison pour fournir une distance corrigée représentative du déplacement de l'organe odométrique par rapport au terrain selon cet axe de mesure.

De préférence ladite distance odomètrique est une distance élémentaire mesurée sur un laps de temps lui correspondant, ledit angle d'inclinaison de contact est mesuré pendant ce même laps de temps et lui correspond aussi, et ladite distance corrigée est une distance odométrique corrigée élémentaire correspondant à ce même laps de temps. Dans ce cas le véhicule comporte des moyens d'intégration pour fournir la somme des distances corrigées élémentaires correspondant à desdits laps de temps formant une succession continue d'un instant initial à un instant de mesure, de manière que cette somme soit représentative du déplacement de l'organe odométrique selon ledit axe de mesure entre ces deux instants.

Pour la compréhension de la portée de cette invention il convient de tenir compte des points suivants :
- La bande de roulement peut être constituée de diverses manières, notamment par une chenille souple, circulant sur un chemin de roulement non circulaire pouvant être fixe par rapport à un corps de véhicule. Elle peut aussi être constituée par la bande externe du pneu d'une roue tournant autour d'un axe et guidée par un palier, le chemin de roulement étant alors circulaire, tournant, et constitué par le reste de cette roue.
- En général, il est préférable que la bande de roulement ne glisse par rapport au terrain ni selon sa longueur, ni selon sa largeur. Mais pour la mise en oeuvre de cette invention, c'est seulement le glissement selon la longueur de cette bande qui fausserait la mesure.
- En général il est préférable que l'organe odométrique supporte une fraction sensible du poids du véhicule pour mettre la bande de roulement en appui sur le terrain. Mais, pour la mise en oeuvre de la présente invention, il suffit que la force d'appui de la bande de roulement sur le terrain soit assez grande pour empêcher cette bande de glisser par rapport au terrain selon sa longueur.
- L'axe de mesure peut être défini de diverses manières. Il peut notamment être défini complètement par rapport au véhicule : c'est par exemple l'axe longitudinal du véhicule. Il peut aussi être défini complètement par rapport au terrain. C'est alors par exemple l'axe horizontal Nord-Sud. Il peut enfin être défini partiellement par rapport à l'un et l'autre. C'est alors par exemple la projection de l'axe longitudinal du véhicule sur un plan horizontal. En fait, pour la navigation d'un véhicule susceptible de changer de direction, il convient d'utiliser au moins deux axes de mesure liés au terrain.
- Les moyens de mesure d'inclinaison de contact peuvent être réalisés de diverses manières. Ils peuvent notamment comporter une succession de capteurs de contact répartis sur une partie du chemin de roulement d'une chenille pour détecter le point où cette chenille vient en appui sur le terrain, ou un palpeur mécanique ou optique pour mesurer localement l'inclinaison du terrain par rapport au corps de véhicule, ou une caméra formant une image de la bande de roulement et du terrain, et suivie de moyens d'analyse d'image, ou encore des capteurs de forces permettant de connaître, en position et en orientation, l'ensemble des forces d'appui qui s'exercent entre la bande de roulement et le terrain. De tels capteurs de forces ont été décrits dans le brevet français n°2 653 731 et la demande de brevet américain n°SN 604 626 (Argouarc'h) qui décrit un véhicule d'intervention auquel la présente invention peut être appliquée.
- Quant aux moyens de calcul de déplacement, ils peuvent eux aussi être de constitutions diverses. Il est notamment possible, mais non nécessaire, qu'une étape du processus de calcul fasse apparaître explicitement la valeur de l'angle d'inclinaison de contact ou de son cosinus. Il est seulement nécessaire que le calcul prenne en compte les informations fournies par les moyens de mesure d'inclinaison de contact d'une manière telle que la distance corrigée soit effectivement égale au produit de la distance odométrique par ce cosinus.

A l'aide des figures schématiques ci-jointes, on va décrire plus particulièrement ci-après, à titre d'exemple non limitatif, comment la présente inventon peut être mise en oeuvre.

Lorsqu'un même élément est représenté sur plusieurs figures il y est désigné par un même signe de référence.

La figure 1 représente une vue de côté d'un premier véhicule selon la présente invention, ce véhicule étant conçu pour illustrer les principes de cette invention.

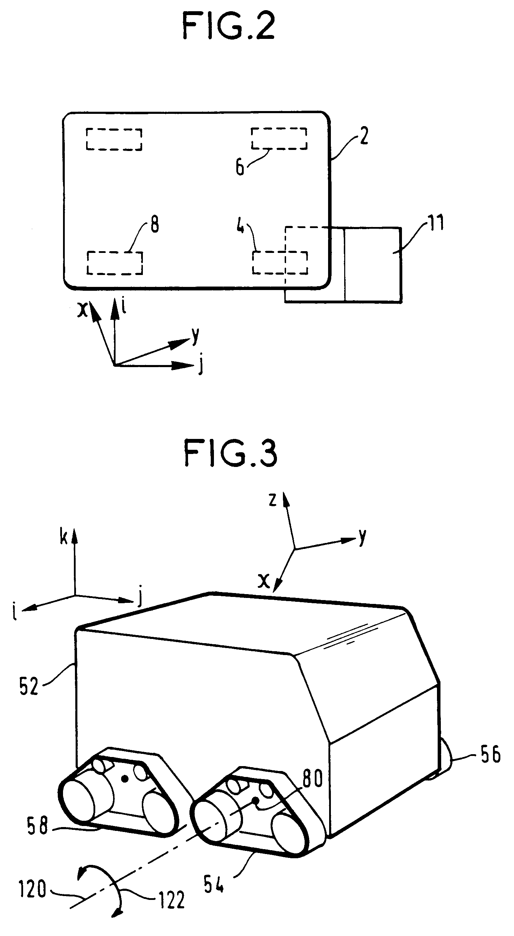

La figure 2 représente une vue de-dessus de ce premier véhicule pour montrer les axes de mesure selon lesquels le déplacement de ce véhicule est mesuré.

La figure 3 représente une vue en perspective d'un deuxième véhicule selon la présente invention, ce véhicule étant réalisé pour permettre des interventions dans des terrains accidentés.

La figure 4 représente une vue de côté d'un propulseur chenillé de ce deuxième véhicule.

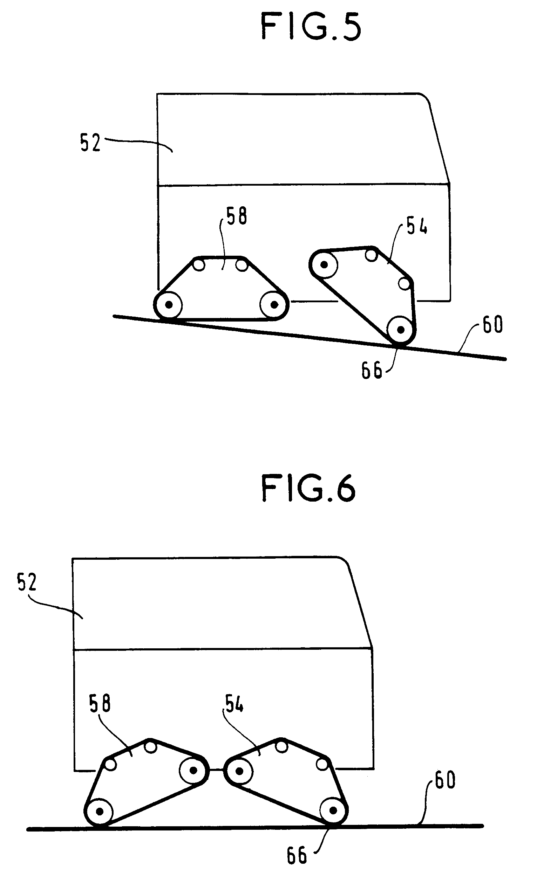

La figure 5 représente une vue de ce deuxième véhicule sur un terrain en pente.

La figure 6 représente une vue de ce deuxième véhicule au cours d'une manoeuvre destinée à surelever le corps de ce véhicule.

La figure 7 représente un schéma par blocs du dispositif de mesure de déplacement de ce deuxième véhicule.

On va d'abord indiquer de manière générale diverses dispositions qui sont communes aux deux véhicules donnés en exemple de mise en oeuvre de cette invention.

Lorsque deux éléments assurent des fonctions homologues dans ou en relation avec ces deux véhicules, respectivement, l'élément du premier véhicule reçoit un numéro de référence inférieur à 50 et l'élément du deuxième véhicule reçoit un numéro de référence augmenté de 50 par rapport au premier.

Parmi les dispositions qui sont communes à ces deux véhicules certaines sont connues pour des véhicules antérieurs.

Selon ces dispositions connues un véhicule comporte un corps de véhicule 2, 52 et un ensemble d'organes de déplacement 4, 6, 8, 54, 56, 58 prenant appui sur un terrain 10, 60 pour porter ce corps et lui permettre de se déplacer.

Au moins un organe de cet ensemble constitue un organe odométrique 4, 54; et comporte lui-même les éléments suivants :
- Une bande de roulement 12, 62 présentant une longueur en boucle fermée. Cette bande est constituée de manière à éviter de glisser selon sa longueur par rapport au terrain lorsqu'elle vient en appui sur celui-ci.
- Un noyau 14, 64 formant un chemin de roulement pour cette bande. Sur les figures ce chemin est confondu avec cette bande et est donc désigné par le même numéro de référence. Ce noyau maintient cette bande sur ce chemin tout en lui permettant d'y circuler selon sa longueur avec un minimum de frottements. Il amène cette bande en appui sur le terrain en un point de contact 16, 66.
- Enfin un organe de liaison 18, 19, 68 reliant ce noyau au corps de véhicule.

Le véhicule comporte en outre un dispositif de mesure de déplacement comportant lui-même un capteur odométrique 20, 70 pour fournir une distance odométrique qui est la distance parcourue par la bande de roulement de l'organe odométrique selon sa longueur sur son chemin de roulement.

Sur le premier véhicule les organes de déplacement sont constitués par quatre roues munies chacune d'un dispositif de suspension.

L'une de ces roues constitue l'organe odométrique 4 et son organe de suspension est symbolisé par une jambe de support télescopique 19 coulissant verticalement sans frottement dans le corps 2, et par un ressort 17 permettant de maintenir une force d'appui verticale permanente de la roue sur le terrain malgré les irrégularités telles que 11 de celui-ci.

La propulsion de ce véhicule est supposée assurée par des moyens non représentés. Le capteur odométrique 20 mesure la rotation de cette roue.

Les organes de déplacement du deuxième véhicule donné en exemple sont constitués par quatre propulseurs chenillés tels que 54. La chenille 62 constituant la bande de roulement de ce propulseur est entraînée par un pignon d'entraînement 100 lui-même entraîné par l'intermédiaire d'une chaîne 103 par un pignon moteur d'avance 102 couplé à un moteur non représenté situé dans le corps du véhicule. Le capteur odométrique 70 mesure la rotation de ce pignon moteur et peut être disposé dans le corps du véhicule.

Dans chacun de ces deux véhicules, conformément à la présente invention, le dispositif de mesure de déplacement prend en compte de manière distincte une succession continue de dites distances odométriques. Ces distances odométriques constituent des distances élémentaires primaires et sont parcourues chacune pendant un laps de temps lui correspondant.

Ces laps de temps se succèdent de manière continue entre un instant initial et un instant de mesure.

Le dispositif de mesure de déplacement comporte en outre les éléments suivants :
- Des moyens de mesure d'inclinaison de contact pour mesurer, en correspondance avec chaque dit laps de temps, un angle d'inclinaison de contact qui est l'angle de la tangente au chemin de roulement au point de contact par rapport à un axe de mesure pendant ce laps de temps. Plusieurs axes de mesure peuvent être définis, soit liés au véhicule, tel que j pour le premier véhicule, ou i, j, k pour le deuxième, soit liés au terrain tels que x, y pour le premier véhicule, et x, y z pour le deuxième. Ces moyens de mesure seront précisés plus loin.
- Des moyens de calcul de déplacement comportant des moyens correcteurs de distance 28, 78 pour affecter chaque distance élémentaire primaire d'un coefficient égal au cosinus de l'angle d'inclinaison correspondant de manière à obtenir une distance élémentaire corrigée représentative du déplacement de l'organe odométrique par rapport au terrain pendant le laps de temps correspondant selon ledit axe de mesure.
- Enfin des moyens d'intégration 28, 78 pour fournir la somme de ces distances élémentaires corrigées, cette somme constituant un déplacement d'organe odométrique représentatif du déplacement de l'organe odométrique selon cet axe de mesure entre ledit instant initial et ledit instant de mesure.

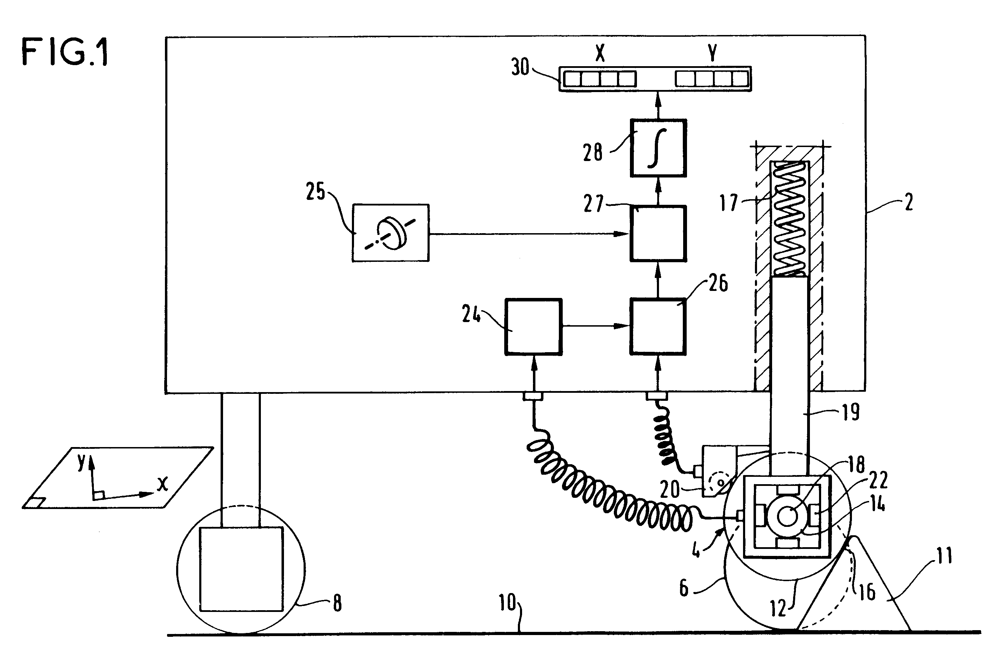

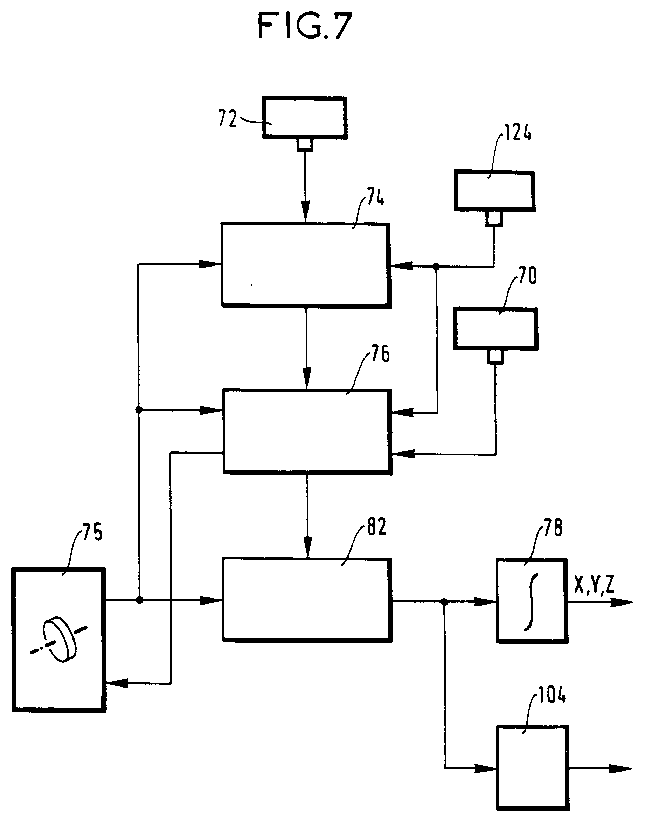

Plus précisément les moyens de mesure d'inclinaison de contact comportent d'abord des moyens de mesure d'inclinaison de contact primaires 22, 72, 24, 74 pour mesurer un angle d'inclinaison primaire qui est celui de la tangente au chemin de roulement au point de contact 16, 66 par rapport à un axe véhicule lié au corps de véhicule 2, 52. Cet axe véhicule est parallèle à un plan de roulement j, k qui est celui dans lequel s'étend la longueur du chemin de roulement. Il est plus particulièrement l'axe longitudinal j selon lequel le véhicule se déplace normalement. Ces moyens de mesure d'inclinaison de contact comportent ensuite un capteur d'orientation absolue 25, 75 pour fournir une orientation dudit axe véhicule j par rapport à au moins un axe terrain tel qu'x, y, ou z lié au terrain et constituant un dit axe de mesure. Ils comportent enfin des moyens de combinaison angulaire 27, 76 combinant l'angle d'inclinaison primaire avec ladite orientation de l'axe véhicule pour fournir l'angle d'inclinaison de contact. Ces moyens de combinaison angulaire sont symbolisés par un circuit 27 du premier véhicule sur la figure 1. Dans le deuxième véhicule, conformément à la figure 7, ils sont intégrés dans les moyens de calcul de déplacement 76.

Les moyens de mesure d'inclinaison de contact primaire comportent :
- au moins un capteur d'effort de liaison 22, 72 disposé pour fournir une mesure d'effort de liaison représentant au moins partiellement un système de forces de liaison transmises par ledit organe de liaison entre le noyau 4, 64 de l'organe odométrique et le corps de véhicule 2, 52,
- et des moyens de calcul d'inclinaison primaire 24, 74 utilisant cette mesure d'effort de liaison pour fournir ledit angle d'inclinaison de contact primaire.

Le poids propre de l'organe odométrique et le chemin de roulement étant connus, la connaissance complète du système de forces de liaison permet aux moyens de calcul 24, 74 de connaître complètement la force qui s'exerce entre le terrain et la bande de roulement, donc notamment le point de contact 16 ou 66 qui est celui où cette force coupe le chemin de roulement, donc l'inclinaison de la tangente à ce chemin. Il n'est cependant pas nécessaire que des capteurs d'effort mesurent les six composantes de ce système de forces. Il suffit de connaître trois composantes définissant la force s'exercant dans le plan de roulement, par exemple une composante verticale, selon l'axe k, une composante horizontale selon l'axe j, et un couple autour de l'axe i. La réalisation des moyens de calcul convenables est à la portée de l'homme du métier.

A titre d'exemple très simple, on peut considérer la situation du premier véhicule représenté à la figure 1, en faisant les hypothèses que la roue 4 ne subit pas de frottement, ce qui élimine tout couple autour de l'axe i, et que l'axe j est horizontal.

Les capteurs tels que 22 mesurent une force horizontale qui, par rapport à la force verticale, est par exemple 1,732 fois plus grande. Un calcul simple montre alors que le flanc de l'obstacle 11 rencontré par la roue présente une inclinaison de 60 degrés par rapport à l'horizontale, c'est-à-dire que l'angle d'inclinaison de contact primaire est 60 degrés. La distance élémentaire corrigée est donc, vis-à-vis de l'axe de mesure j, égale à la moitié de la distance élémentaire primaire mesurée par le capteur odométrique 20.

Cette distance élémentaire est corrigée une première fois pour cela en 26. Pour fournir un déplacement dans le référentiel terrain, cette distance élémentaire est corrigée en outre une deuxième fois en 27 à partir des informations d'orientation fournies par une centrale inertielle 25.

Pour fournir deux déplacements élémentaires corrigés selon les deux axes x et y cette deuxième correction est effectuée deux fois en parallèle par multiplication par le cosinus de l'angle entre l'axe j et l'axe x, et par le cosinus de l'angle entre l'axe j et l'axe y. Les déplacements élémentaires corrigés selon ces deux axes sont intégrés dans des moyens d'intégration 28 pour fournir les coordonnées X et Y du véhicule à partir d'un point origine.

Ces coordonnées sont inscrites dans un organe d'enregistrement 30.

Des calculs analogues, quoique plus complexes, sont effectués dans le deuxième véhicule donné en exemple. Dans ce deuxième véhicule l'organe de liaison 68 permet des déplacements du corps de véhicule 52 par rapport à l'organe odométrique 54 et la position et l'orientation du corps de véhicule doivent être connues selon trois axes. C'est pourquoi ce véhicule comporte un capteur de déplacement de liaison 124 pour mesurer au moins indirectement un déplacement relatif du corps de véhicule par rapport au noyau 64 de l'organe odométrique 54 dans un référentiel véhicule constitué de trois axes véhicule i, j, k. Les moyens de calcul de déplacement 76 ajoutent ce déplacement relatif de corps de véhicule au déplacement d'organe odométrique dans le référentiel véhicule de manière à obtenir un déplacement primaire de corps de véhicule dans ce référentiel véhicule.
- Un capteur d'orientation constitué par une centrale inertielle fournit une orientation de ce référentiel véhicule dans un référentiel terrain lié au terrain et constitué par trois axes terrain x, y, z.

Les moyens de calcul de déplacement utilisent d'une part ce déplacement primaire de corps de véhicule, d'autre part, cette orientation du référentiel véhicule pour fournir des déplacements de véhicule représentatifs du déplacement du corps de véhicule dans le référentiel terrain.

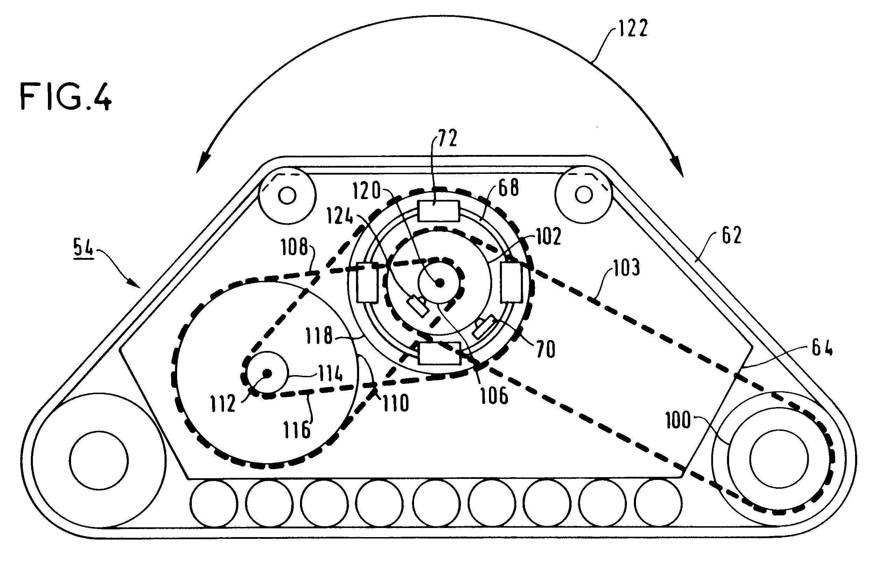

Ces déplacements relatifs du corps de véhicule 52 résultent notamment de mouvements d'inclinaison du noyau 64 de l'organe odométrique 54 par rapport au corps de véhicule autour d'un axe d'inclinaison 120 lié à cet organe et parallèle à l'axe i, qui est un axe transversal. Un tel mouvement est représenté par une flèche 122 sur la figure 4. Plus précisement le capteur de déplacement de liaison 124 fournit un vecteur vitesse d'inclinaison d'organe odométrique orienté selon l'axe 120 et ayant une grandeur représentative de la vitesse angulaire du mouvement d'inclinaison. Le plan de roulement est perpendiculaire à cet axe d'inclinaison et rencontre cet axe en un centre d'inclinaison 80. Le chemin de roulement s'écarte d'un cercle dont le centre serait ce centre d'inclinaison.

Les moyens de mesure d'inclinaison de contact comportant les capteurs 74 fournissent la position du point de contact 66 dans le référentiel véhicule.

Les moyens de calcul de déplacement 76 utilisent ledit vecteur d'inclinaison d'organe odométrique et cette position de point de contact pour fournir une vitesse relative de centre d'inclinaison représentative de la vitesse du déplacement de ce centre d'inclinaison par rapport au terrain sous l'effet dudit mouvement d'inclinaison dans ce référentiel véhicule. Cette vitesse est le produit vectoriel dudit vecteur d'inclinaison d'organe odométrique par un vecteur joignant le centre d'inclinaison au point de contact. Une intégration de cette vitesse relative donne un déplacement relatif d'inclinaison qui est ajouté au déplacement d'organe de roulement pour fournir un dit déplacement primaire de corps de véhicule.

Bien entendu la position et l'attitude du corps de véhicule ne peuvent être complètement connus qu'avec l'aide d'autres informations, par exemple par la connaissance des déplacements de trois centres d'inclinaison de trois organes odométriques.

Le mouvement d'inclinaison est rendu possible par le fait que le noyau 64 de l'organe odométrique 54 est monté rotatif autour d'un moyeu tubulaire 68 constituant l'organe de liaison précédemment mentionné. Le pignon moteur d'avance 102 est entraîné à partir du corps du véhicule par un arbre d'avance non représenté passant à l'intérieur de ce moyeu. Le mouvement d'inclinaison est entraîné lui aussi à partir du corps du véhicule par un arbre d'inclinaison passant à l'intérieur de l'arbre de l'arbre d'avance et portant en bout un pignon moteur d'inclinaison 106. Ce dernier entraîne, par l'intermédiaire d'une chaîne 108, une roue dentée 110 tournant autour d'un axe intermédiaire 112 lié au noyau 64. La roue 110 entraîne coaxialement une roue dentée de plus petit diamètre 114 entraînant une chaîne 116 qui vient prendre appui sur une roue dentée 118 solidaire du moyeu 68. Les éléments 106 à 118 constituent un démultiplicateur de vitesse d'inclinaison.

Les capteurs d'effort de liaison 72 sont insérés dans le moyeu 68 de manière que les efforts transmis par ce moyeu passent par ces capteurs.

Le véhicule représenté comporte en fait quatre organes odométriques tels que 54, 56, et 58 pour fournir quatre distances élementaires primaires, respectivement.

Les moyens de calcul de déplacement 76 comportent des moyens de calcul de déplacement odométrique pour fournir plusieurs distances élémentaires corrigées à partir de chacune de ces distances élémentaires primaires et pour fournir, à partir de chacune de ces distances, une estimation de déplacement élémentaire de véhicule représentative d'un déplacement du corps de véhicule 52 pendant le laps de temps correspondant.

Par ailleurs les laps de temps considérés sont déterminés de sorte que chaque telle estimation de déplacement élémentaire de véhicule constitue une estimation de vitesse odométrique, et la centrale inertielle 75 fournit, pour chacun de ces laps de temps, une estimation de vitesse inertielle obtenue par intégration de mesures d'accélérations et représentative d'au moins une vitesse de ce corps.

Les moyens de calcul de déplacement 76 sont alors complétés par des moyens de fusion d'informations 82 pour effectuer une fusion de ces estimations de vitesses odométriques et inertielle de manière à fournir une estimation de vitesse globale. Ces moyens de fusion d'informations 82 constituent par exemple en même temps un filtre de Kalman pour filtrer les estimations de vitesses odométriques et inertielles. Ils fournissent séparément d'une part, à l'aide des moyens d'intégration 78, le déplacement d'un point du corps de véhicule, pour permettre de connaître la position du véhicule sur le terrain, d'autre part, avant intégration, avec l'aide d'un organe de conversion 104, les vitesses des divers propulseurs dans le référentiel véhicule.

On comprendra que les divers moyens de calcul tels que 74, 76, 78, 82, 104 peuvent avantageusement être implantés dans un même ordinateur sous la forme de divers logiciels ou d'un seul logiciel regroupant les diverses fonctions indiquées ci-dessus.

## Revendications

1. Dispositif de mesure de déplacement pour véhicule, notamment pour robot tout-terrain, ce dispositif comportant :
- une bande de roulement (12, 62) présentant une longueur en boucle fermée, cette bande étant constituée de manière à ne pas glisser selon sa longueur par rapport à un terrain (10, 60) sur lequel elle est mise en appui,
- un organe odométrique (4) portant et guidant cette bande de roulement en lui permettant de circuler selon sa longueur sur un chemin de roulement qui est formé par cet organe et qui permet de mettre cette bande en appui sur ledit terrain,
- et un capteur odométrique (20, 70) pour fournir une distance odométrique qui est la distance parcourue par cette bande de roulement selon sa longueur sur ce chemin de roulement,
ce dispositif étant caractérisé par le fait qu'il comporte en outre :
- des moyens de définition d'un axe de mesure (j),
- des moyens de mesure d'inclinaison de contact (22, 24, 72, 74) pour fournir un angle d'inclinaison de contact qui est, par rapport à cet axe de mesure, l'angle d'inclinaison de la tangente au chemin de roulement en un point de contact (16, 66) où la bande de roulement vient en appui sur le terrain,
- et des moyens de calcul de déplacement (26, 76) alimentés par ledit capteur odométrique et par ces moyens de mesure d'inclinaison, ces moyens de calcul effectuant, au moins indirectement, une multiplication de cette distance odométrique par le cosinus de cet angle d'inclinaison pour fournir une distance corrigée représentative du déplacement de l'organe odométrique par rapport au terrain selon cet axe de mesure.

2. Dispositif selon la revendication 1, ladite distance odomètrique étant une distance élémentaire mesurée sur un laps de temps lui correspondant, ledit angle d'inclinaison de contact étant mesuré pendant ce même laps de temps et lui correspondant, ladite distance corrigée étant une distance corrigée élémentaire correspondant à ce même laps de temps,
ce dispositif étant en outre caractérisé par le fait qu'il comporte des moyens d'intégration (26, 76) pour fournir la somme de dites distances corrigées élémentaires correspondant à desdits laps de temps formant une succession continue d'un instant initial à un instant de mesure, de manière que cette somme soit représentative du déplacement de l'organe odométrique (4, 54) selon ledit axe de mesure (j) entre ces deux instants.

3. Véhicule, notamment robot tout-terrain, comportant :
- un corps de véhicule (2, 52); et
- un ensemble d'organes de déplacement (4, 6, 8, 54, 56, 58) prenant appui sur un terrain (10, 60) pour porter ce corps et lui permettre de se déplacer, au moins un organe de cet ensemble constituant un organe odométrique (4, 54), ledit organe odométrique comportant :
- une bande de roulement (12, 62) présentant une longueur en boucle fermée, cette bande étant constituée de manière à ne pas glisser selon sa longueur par rapport au terrain lorsqu'elle vient en appui sur celui-ci,
- un noyau (14, 64) formant un chemin de roulement pour cette bande de roulement pour maintenir cette bande et lui permettre de circuler selon sa longueur sur ce chemin, ce chemin de roulement amenant cette bande en appui sur le terrain en un point, de contact (16, 66);
- et un organe de liaison (18, 19, 68) reliant ce noyau au corps de véhicule,
- ledit véhicule comportant en outre un dispositif de mesure de déplacement comportant un capteur odométrique (20, 70) pour fournir une distance odométrique que est la distance parcourue par ladite bande de roulement de l'organe odométrique selon sa longueur sur son chemin de roulement,
- ce véhicule étant caractérisé par le fait que ledit dispositif de mesure de déplacement est agencé pour mesurer de manière distincte une succession continue de dites distances odométriques, ces distances odométriques constituant des distances élémentaires primaires et étant parcourues chacune pendant un laps de temps lui correspondant, ces laps de temps se succédant de manière continue entre un instant initial et un instant de mesure,
- ledit dispositif de mesure de déplacement comportant en outre :
- des moyens pour définir au moins un axe de mesure,
- des moyens de mesure d'inclinaison de contact (22, 24, 25, 72, 74) pour mesurer, en correspondance avec chaque dit laps de temps, un angle d'inclinaison de contact qui est l'angle de la tangente audit chemin de roulement audit point de contact par rapport à un dit axe de mesure (x, y, z) pendant ce laps de temps,
- et des moyens de calcul de déplacement constituant :
- des moyens correcteurs de distance (26, 27, 76) pour affecter chaque dite distance élémentaire primaire d'un coefficient égal au cosinus de l'angle d'inclinaison correspondant de manière à obtenir une distance élémentaire corrigée représentative du déplacement de l'organe odométrique par rapport au terrain pendant le laps de temps correspondant selon ledit axe de mesure,
- et des moyens d'intégration (28, 78) pour fournir la somme de ces distances élémentaires corrigées, cette somme constituant un déplacement d'organe odométrique, le déplacement étant mesuré selon cet axe de mesure entre ledit instant initial et ledit instant de mesure.

4. Véhicule selon la revendication 3 dans lequel lesdits moyens de mesure d'inclinaison de contact comportent des moyens de mesure d'inclinaison de contact primaire (22, 72) pour mesurer un angle d'inclinaison primaire qui est celui de la tangente au chemin de roulement audit point de contact (16, 66) par rapport à un axe véhicule (j) lié au corps de véhicule (62, 52).

5. Véhicule selon la revendication 4 caractérisé par le fait que lesdits moyens de mesure d'inclinaison de contact comportent en outre au moins un capteur d'orientation (25, 75) pour fournir une orientation dudit axe véhicule (j) par rapport à un référentiel terrain (x, y, z) comportant au moins un axe terrain lié audit terrain (60) et constituant un dit axe de mesure, et des moyens de combinaison angulaire (27, 76) combinant ledit angle d'inclinaison primaire avec ladite orientation de l'axe véhicule pour fournir ledit angle d'inclinaison de contact.

6. Véhicule selon la revendication 4 dans lequel ledit chemin de roulement (12, 62) forme une boucle dans un plan de roulement (j, k), ledit axe véhicule (j) étant situé dans ce plan.

7. Véhicule selon la revendication 4 caractérisé par le fait que lesdits moyens de mesure d'inclinaison de contact primaires comportent
- au moins un capteur d'effort de liaison (22, 72) disposé pour fournir une mesure d'effort de liaison représentant au moins partiellement un système de forces de liaison transmises par ledit organe de liaison entre le noyau (4, 64) de l'organe odométrique et le corps de véhicule (2, 52),
- et des moyens de calcul d'inclinaison primaire (24, 74) utilisant cette mesure d'effort de liaison pour fournir ledit angle d'inclinaison de contact primaire.

8. Véhicule selon la revendication 3, dans lequel ledit organe de liaison (68) permet des déplacements du corps de véhicule (2, 52) par rapport à l'organe odométrique (4, 54),
- ce véhicule étant caractérisé par le fait qu'il comporte :
- au moins un capteur de déplacement de liaison (124) pour mesurer au moins indirectement un déplacement relatif du corps de véhicule par rapport au noyau (64) de l'organe odométrique (54) dans un référentiel véhicule (i, j, k) lié au corps de véhicule et constitué de dits axes de mesure,
- des moyens de calcul (76) pour ajouter ce déplacement relatif de corps de véhicule audit déplacement d'organe odométrique dans ledit référentiel véhicule de manière à obtenir un déplacement primaire de corps de véhicule dans ce référentiel véhicule, et
- un capteur d'orientation (25, 75) pour fournir une orientation de ce référentiel véhicule dans un référentiel terrain lié au terrain et constitué par au moins deux axes-terrain, constituant d'autres dits axes de mesure,
- lesdits moyens de calcul de déplacement (76) utilisant d'une part ce déplacement primaire de corps de véhicule, d'autre part cette orientation du référentiel véhicule pour fournir un déplacement de véhicule représentatif du déplacement du corps de véhicule dans le référentiel terrain.

9. Véhicule selon la revendication 3 caractérisé par le fait qu'il comporte plusieurs dits organes odométriques (54, 56, 58) pour fournir plusieurs dites distances odométriques primaires, respectivement, lesdits moyens de calcul de déplacement comportant des moyens de calcul de déplacement odométrique (76) pour fournir plusieurs dites distances élémentaires corrigées à partir de ces distances élémentaires primaires et pour fournir, à partir de chacun de ces distances une estimation de déplacement élémentaire de véhicule représentative d'un déplacement dudit corps de véhicule (52) pendant le laps de temps correspondant, lesdits laps de temps étant déterminés de sorte que chaque telle estimation de déplacement élémentaire de véhicule constitue une estimation de vitesse odométrique, ce corps de véhicule portant une centrale inertielle (75) pour fournir, pour chaque dit laps de temps, à partir de mesures d'accélérations, une estimation de vitesse inertielle représentative d'au moins une vitesse de ce corps, lesdits moyens de calcul de déplacement comportant en outre des moyens de fusion d'informations (82) pour effectuer une fusion desdites estimations de vitesses odométriques et inertielle de manière à fournir une estimation de vitesse globale.

10. Véhicule selon la revendication 9 dans lequel lesdits moyens de fusion d'informations (82) constituent un filtre de Kalman pour filtrer lesdites estimations de vitesse odométriques et inertielle.

## Claims

1. Apparatus for measuring the displacement of a vehicle, in particular an all-terrain robot, the apparatus including:
a tread strip (12, 62) whose length constitutes a closed loop, the strip being constituted such that it does not slip lengthwise relative to the terrain (10, 60) on which it is made to bear;
an odometer member (4) carrying and guiding the tread strip by enabling it to move lengthwise over a tread-way which is formed by the odometer member and which enables the strip to be made to bear on said terrain; and
an odometer sensor (20, 70) for supplying an odometer distance which is the distance travelled by the tread strip over the tread-way;
the apparatus being characterized by the fact that it further includes:
means for defining a measurement axis (j);
contact-inclination measuring means (22, 24, 72, 74) for supplying a contact angle of inclination which, relative to the measurement axis, is the angle of inclination of the tangent to the tread-way at a point of contact (16, 66) where the tread strip bears against the terrain; and
displacement calculating means (26, 76) fed by said odometer sensor and by the contact-inclination measuring means, which calculating means, at least indirectly, multiply the odometer distance by the cosine of the angle of inclination so as to supply a corrected distance representative of the displacement of the odometer member relative to the terrain along the measurement axis.

2. Apparatus according to claim 1, said odometer distance being a unit distance measured over a time lapse corresponding thereto, said contact angle of inclination being measured during the same time lapse and corresponding thereto, said corrected distance being a corrected unit distance corresponding to the same time lapse;
the apparatus further being characterized by the fact that it includes integration means (26, 76) for supplying the sum of said corrected unit distances corresponding to said time lapses forming a continuous succession from an initial instant to a measurement instant, such that the sum is representative of the displacement of the odometer member (4, 54) along said measurement axis (j) between the two instants.

3. A vehicle, in particular an all-terrain robot, including:
a vehicle body (2, 52); and
a set of displacement members (4, 6, 8, 54, 56, 58) bearing against a terrain (10, 60) to carry the body and to enable it to be displaced, at least one member in the set constituting an odometer member (4, 54), said odometer member including:
a tread strip (12, 62) whose length constitutes a closed loop, the strip being constituted such that it does not slip lengthwise relative to the terrain when it bears thereagainst;
a core (14, 64) forming a tread-way for the tread strip so as to hold the strip and to enable it to move lengthwise over the tread-way, the tread-way bringing the strip to bear against the terrain at a point of contact (16, 66); and
a connection member (18, 19, 68) connecting the core to the vehicle body;
said vehicle further including displacement measuring apparatus including an odometer sensor (20, 70) for supplying an odometer distance which is the distance travelled lengthwise by the tread strip of the odometer member over the tread-way;
the vehicle being characterized by the fact that said displacement measuring apparatus is organized to measure a continuous succession of distinct odometer distances, each of the odometer distances constituting a primary unit distance travelled during a time lapse corresponding thereto, the time lapses succeeding one another continuously from an initial instant to a measurement instant;
said displacement measuring apparatus further including:
means for defining at least one measurement axis;
contact-inclination measuring means (22, 24, 25, 72, 74) for measuring a contact angle of inclination corresponding to each of said time lapses, which angle is the angle of inclination of the tangent to said tread-way at said point of contact relative to one of said measurement axes (x, y, z) during the time lapse; and
displacement calculating means constituting:
distance-correcting means (26, 27, 76) for allocating a coefficient to each of said primary unit distances, which coefficient is equal to the cosine of the corresponding angle of inclination so as to obtain a corrected unit distance representative of the displacement of the odometer member relative to the terrain during the corresponding time lapse and along said measurement axis; and
integration means (28, 78) for supplying the sum of said corrected unit distances, the sum constituting the odometer member displacement, the displacement being measured along the measurement axis and between said initial instant and said measurement instant.

4. A vehicle according to claim 3, in which said contact-inclination measuring means include primary contact-inclination means (22, 72) for measuring a primary angle of inclination which is the angle of inclination of the tangent to the tread-way at said point of contact (16, 66) relative to a vehicle axis (j) defined relative to the vehicle body (62, 52).

5. A vehicle according to claim 4, characterized by the fact that said contact-inclination measuring means further include at least one orientation sensor (25, 75) for supplying the orientation of said vehicle axis (j) relative to a terrain frame of reference (x, y, z) including at least one terrain axis defined relative to said terrain (60) and constituting one of said measurement axes, and angle-combining means (27, 76) for combining said primary angle of inclination with said orientation of the vehicle axis so as to supply said contact angle of inclination.

6. A vehicle according to claim 4, in which said tread-way (12, 62) forms a loop in a tread plane (j, k), said vehicle axis (j) being situated in said plane.

7. A vehicle according to claim 4, characterized by the fact that said primary contact-inclination measuring means include:
at least one connection-force sensor (22, 72) disposed so as to supply a connection-force measurement at least partially representing a system of connection forces transmitted via said connection member between the core (4, 64) of the odometer member and the vehicle body (2, 52); and
primary inclination calculating means (24, 74) using the connection force measurement to supply said primary contact angle of inclination.

8. A vehicle according to claim 3, in which said connection member (68) enables the vehicle body (2, 52) to be displaced relative to the odometer member (4, 54);
the vehicle being characterized by the fact that it includes:
at least one connection-displacement sensor (124) for measuring, at least indirectly, relative displacement of the vehicle body relative to the core (64) of the odometer member (54) in a vehicle frame of reference (i, j, k) defined relative to the vehicle body and constituted by said measurement axes;
calculating means (76) for adding the relative displacement of the vehicle body to said odometer member displacement in said vehicle frame of reference so as to obtain a primary vehicle body displacement in the vehicle frame of reference; and
an orientation sensor (25, 75) for supplying the orientation of the vehicle frame of reference in a terrain frame of reference defined relative to the terrain and constituted by at least two terrain axes, constituting other ones of said measurement axes;
said displacement calculating means (76) using both the primary vehicle body displacement and the orientation of the vehicle frame of reference to supply a vehicle displacement representative of the displacement of the vehicle body in the terrain frame of reference.

9. A vehicle according to claim 3, characterized by the fact that it includes a plurality of said odometer members (54, 56, 58) to supply a plurality of respective ones of said primary odometer distances, said displacement calculating means including odometer displacement calculating means (76) for supplying a plurality of said corrected unit distances on the basis of the primary unit distances, and for using each of the distances to supply a vehicle unit displacement estimate representative of a displacement of said vehicle body (52) during the corresponding time lapse, said time lapses being determined such that each such vehicle unit displacement estimate constitutes an odometer velocity estimate, the vehicle body carrying an inertial unit (75) for using acceleration measurements to supply an inertial velocity estimate for each of said time lapses, which inertial velocity estimate is representative of at least one velocity of the body, said displacement calculating means further including data-merging means (82) for merging said odometer velocity estimates and said inertial velocity estimate to supply an overall velocity estimate.

10. A vehicle according to claim 9, in which said data-merging means (82) constitute a Kalman filter for filtering said odometer velocity estimates and said inertial velocity estimate.

## Patentansprüche

1. Vorrichtung zur Messung der Bewegung eines Fahrzeugs, insbesondere eines Roboters für schwieriges Gelände, wobei die Vorrichtung aufweist:
- ein Rollband (12, 62), das eine Länge in einer geschlossenen Schleife bildet und so gestaltet ist, daß es in Längsrichtung bezüglich eines Geländes (10, 60) nicht gleitet, auf dem es aufliegt,
- ein Streckenmeßorgan (4), das dieses Rollband trägt und führt und in Längsrichtung auf einem Rollweg umlaufen läßt, der durch dieses Organ gebildet wird und das Band auf das Gelände aufdrücken kann,
- und eine Streckenmeßsonde (20, 70), um eine Streckenlänge zu liefern, die die von dem Rollband durchlaufene Strecke in Längsrichtung auf den Rollweg bildet, dadurch gekennzeichnet, daß die Vorrichtung weiter enthält:
- Mittel zur Definition einer Meßachse (j),
- Mittel zur Messung des Kontaktwinkels (22, 24, 72, 74), die einen Kontaktneigungswinkel liefern, der bezüglich der Meßachse den Neigungswinkel der Tangente zum Rollweg in einem Kontaktpunkt (16, 66) darstellt, in dem das Rollband auf dem Gelände aufliegt,
- und Bewegungsrechenmittel (26, 76), die von der Streckenmeßsonde und von den Mitteln zur Winkelmessung gespeist werden und zumindest indirekt eine Multiplizierung dieser gemessenen Strecke mit dem Kosinus des Neigungswinkels durchführen, um eine für die Bewegung des Streckenmeßorgans bezüglich des Geländes entlang der Meßachse repräsentative korrigierte Strecke zu liefern.

2. Vorrichtung nach Anspruch 1, bei der die Meßstrecke eine Elementarstrecke ist, die in einer entsprechenden Zeitdauer gemessen wird und bei der der Kontaktneigungswinkel während dieser entsprechenden Zeitdauer gemessen wird, wobei die korrigierte Strecke eine korrigierte Elementarstrecke entsprechend dieser Zeitdauer ist, dadurch gekennzeichnet, daß die Vorrichtung weiter Integrationsmittel (26, 76) aufweist, um die Summe von korrigierten Elementarstrecken entsprechend einer Anzahl von Zeitdauern zu liefern, die eine kontinuierliche Folge ab einem Ursprungszeitpunkt bis zum Meßzeitpunkt bilden, so daß diese Summe für die Verschiebung des Streckenmeßorgans (4, 54) entlang der Meßachse (j) zwischen diesen beiden Zeitpunkten repräsentativ ist.

3. Fahrzeug, insbesondere ein Roboter für schwieriges Gelände,
- mit einem Fahrzeugkörper (2, 52),
- und mit einer Gruppe von Bewegungsorganen (4, 6, 8, 54, 56, 58), die sich auf dem Gelände (10, 60) abstützen, um den Körper zu tragen und ihn zu verschieben, wobei mindestens ein Organ dieser Gruppe ein Streckenmeßorgan (4, 54) bildet, das aufweist:
- ein Rollband (12, 62) mit einer bestimmten Länge in geschlossener Schleife, das so gestaltet ist, daß es in Längsrichtung bezüglich des Geländes nicht gleitet, wenn es auf diesem aufliegt,
- einen Kern (14, 64), der einen Rollweg für dieses Rollband bildet, um das Band zu halten und in seiner Längsrichtung auf diesem Weg umlaufen zu lassen, wobei dieser Rollweg das Band auf das Gelände in einem Kontaktpunkt (16, 66) aufdrückt,
- und ein Verbindungsorgan (18, 19, 68), das diesen Kern mit dem Fahrzeugkörper verbindet,
- wobei das Fahrzeug weiter eine Vorrichtung zur Bewegungsmessung aufweist, zu der eine Streckenmeßsonde (20, 70) gehört, um eine gemessene Streckenlänge zu liefern, die die von dem Rollband des Streckenmeßorgans in seiner Längsrichtung auf dem Rollweg durchlaufene Strecke ist, dadurch gekennzeichnet, daß die Vorrichtung zur Bewegungsmessung zur getrennten Messung einer kontinuierlichen Folge von Elementarstrecken ausgebildet ist, die primäre Elementarstrecken bilden und während je einer der entsprechenden Zeitdauern durchfahren werden, wobei diese Zeitdauern kontinuierlich ab einem Ursprungszeitpunkt bis zu einem Meßzeitpunkt aufeinanderfolgen,
- wobei die Bewegungsmeßvorrichtung weiter aufweist
- Mittel, um mindestens eine Meßachse zu definieren,
- Mittel zur Messung des Kontaktwinkels (22, 24, 25, 72, 74), die in jeder Zeitdauer einen Kontaktneigungswinkel messen, der der Winkel der Tangente des Rollwegs im Kontaktpunkt bezüglich einer der Meßachsen x, y, z) während dieser Zeitdauer ist,
- und Bewegungsrechenmittel, die enthalten:
- - Mittel zur Streckenlängenkorrektur (26, 27, 76), um jede primäre Elementarstreckenlänge mit einem Koeffizienten gleich dem Kosinus des entsprechenden Neigungswinkels zu multiplizieren, so daß sich eine korrigierte Elementarstreckenlänge ergibt, die für die Bewegung des Streckenmeßorgans bezüglich des Geländes während dieser entsprechenden Zeitdauer entlang der Meßachse repräsentativ ist,
- - und Integrationsmittel (28, 78), um die Summe dieser korrigierten Elementarstrecken zu liefern, die eine Bewegung des Streckenmeßorgans wiedergibt, wobei die Bewegung entlang der Meßachse zwischen dem Ursprungszeitpunkt und dem Meßzeitpunkt gemessen wird.

4. Fahrzeug nach Anspruch 3, in dem die Mittel zur Messung des Kontaktwinkels Mittel zur Messung des primären Kontaktwinkels (22, 72) enthalten, die einen primären Neigungswinkel messen, der der Tangente an den Rollweg im Kontaktpunkt (16, 66) bezüglich einer mit dem Fahrzeugkörper (62, 52) verbundenen Fahrzeugachse (j) bildet.

5. Fahrzeug nach Anspruch 4, dadurch gekennzeichnet, daß die Mittel zur Messung des Kontaktwinkels außerdem mindestens eine Orientierungssonde (25, 75) aufweisen, die eine Orientierung der Fahrzeugachse (j) bezüglich eines Gelände-Bezugssystems (x, y, z) liefert, das mindestens eine mit dem Gelände verknüpfte Achse (60) enthält, die die Meßachse bildet, und daß weiter Winkelkombinationsmittel (27, 76) vorgesehen sind, um den primären Neigungswinkel mit der Orientierung der Fahrzeugachse zu kombinieren und den Kontaktneigungswinkel zu liefern.

6. Fahrzeug nach Anspruch 4, in dem der Rollweg (12, 62) eine Schleife in einer Rollebene (j, k) bildet, wobei die Fahrzeugachse (j) sich in dieser Ebene befindet.

7. Fahrzeug nach Anspruch 4, dadurch gekennzeichnet, daß die Mittel zur Messung des primären Kontaktwinkels aufweisen:
- mindestens eine Verbindungskraftmeßsonde (22, 72), die einen Meßwert der Verbindungskraft liefert, der mindestens teilweise ein System von Verbindungskräften darstellt, die von dem Verbindungsorgan zwischen dem Kern (14, 64) des Streckenmeßorgans und dem Fahrzeugkörper (2, 52) übertragen werden,
- und primäre Neigungsrechenmittel (24, 74), die diesen Verbindungskraftmeßwert verwenden, um den primären Kontaktneigungswinkel zu liefern.

8. Fahrzeug nach Anspruch 3, in dem das Verbindungsorgan (68) Bewegungen des Fahrzeugkörpers (2, 52) bezüglich des Streckenmeßorgans (4, 54) erlaubt, dadurch gekennzeichnet, daß es aufweist:
- mindestens eine Verbindungsbewegungssonde (124), um mindestens indirekt eine Relativbewegung des Fahrzeugkörpers bezüglich des Kerns (64) des Streckenmeßorgans (54) in einem Fahrzeugbezugssystems (i, j, k) zu messen, das mit dem Fahrzeugkörper verbunden ist und aus den Meßachsen besteht,
- Rechenmittel (76), um diese Relativbewegung des Fahrzeugkörpers zur Bewegung des Streckenmeßorgans in dem Fahrzeugbezugssystem zu addieren, so daß sich eine primäre Bewegung des Fahrzeugkörpers im Fahrzeugbezugssystem ergibt,
- und eine Orientierungssonde (25, 75), um eine Ausrichtung dieses Fahrzeugbezugssystems zu einem mit dem Gelände verknüpften Bezugssystem zu liefern, das aus mindestens zwei Geländeachsen besteht, die weitere Meßachsen bilden,
- wobei die Bewegungsrechenmittel (76) einerseits die primäre Bewegung des Fahrzeugkörpers und andererseits die Ausrichtung des Fahrzeugbezugssystems verwenden, um eine Bewegung des Fahrzeugs zu liefern, die für die Bewegung des Fahrzeugkörpers im Geländebezugssystem repräsentativ ist.

9. Fahrzeug nach Anspruch 3, dadurch gekennzeichnet, daß es mehrere Streckenmeßorgane (54, 56, 58) aufweist, um mehrere primäre Meßstrecken zu liefern, und daß die Bewegungsrechenmittel auf der Streckenmessung beruhende Rechenmittel (76) aufweisen, um mehrere korrigierte Elementarstrecken ausgehend von den primären Elementarstrecken zu liefern und ausgehend von jeder der Strecken eine Abschätzung der Elementarbewegung des Fahrzeugs entsprechend einer Bewegung des Fahrzeugkörpers (52) während der entsprechenden Zeitdauer zu liefern, wobei diese Zeitdauer so bestimmt ist, daß jede derartige Abschätzung der Elementarbewegung des Fahrzeugs eine Abschätzung der auf der Streckenmessung beruhenden Geschwindigkeit ist, und daß der Fahrzeugkörper eine Trägheitszentrale (75) trägt, die für jede Zeitdauer aufgrund von Beschleunigungsmessungen eine Geschwindigkeitsabschätzung auf der Basis der Trägheitsmessung liefert, die für mindestens eine Geschwindigkeit des Körpers repräsentativ ist, wobei die Bewegungsrechenmittel weiter Mittel zur Kombination von Informationen (28) aufweisen, die die Schätzwerte der aufgrund der Streckenmessung und aufgrund der Beschleunigungsmessung erhaltenen Schätzwerte kombinieren, so daß sich eine globale Geschwindigkeitsabschätzung ergibt.

10. Fahrzeug nach Anspruch 9, in dem die Mittel zur Kombination von Informationen (82) ein Kalman-Filter bilden, um die auf der Streckenmessung und der Beschleunigungsmessung beruhenden Schätzungen zu filtern.
